# EUROPÄISCHE PATENTSCHRIFT

(11) **EP 0 650 967 B1**
(45) Veröffentlichungstag und Bekanntmachung des Hinweises auf die Patenterteilung: **18.11.1998**
(21) Anmeldenummer: 94113747.3
(22) Anmeldetag: 02.09.1994
(51) Int. Cl.: C07F 5/06, C08F 4/02

(54) **Verfahren zur Herstellung von Alkylaluminoxanen auf inerten Trägermaterialien**
Process for the preparation of alkylaluminoxanes on an inert support
Procédé de préparation d'alkylaluminoxanes sur support inerte

(30) Priorität: 27.10.1993 DE 4336659
(43) Veröffentlichungstag der Anmeldung: 03.05.1995
(73) Patentinhaber: Witco GmbH, 59192 Bergkamen (DE)
(72) Erfinder: Gürtzgen, Stefan, Dr., D-42360 Wuppertal (DE)

(56) Entgegenhaltungen:
- EP-A- 0 257 695
- EP-A- 0 315 234
- EP-A- 0 372 483
- EP-A- 0 442 725
- EP-A- 0 552 945
- EP-A- 0 567 952
- EP-A- 0 578 838
- US-A- 4 772 736

## Beschreibung

Alkylaluminoxane, insbesondere Methylaluminoxan, gewinnen zunehmend an Bedeutung als essentieller Bestandteil einer neuen Generation von Katalysatorsystemen zur Herstellung von Polyolefinen ("Single Site Catalysts"). Diese neuen Katalysatoren bestehen im wesentlichen, wie bereits aus der klassischen Ziegler-Natta-Katalyse bekannt, aus einer Übergangsmetallverbindung als Katalysator sowie dem eingangs erwähnten Alkylaluminoxan als aluminiumorganischer Cokatalysator-Komponente. Als Übergangsmetallverbindung werden bevorzugt Cyclopentadiendienyl-, Indenyl- oder Fluorenylderivate der Gruppe IVa des Periodensystems der Elemente eingesetzt. Solche Systeme besitzen im Gegensatz zu konventionellen Ziegler-Natta-Katalysatoren neben einer hohen Aktivität und Produktivität nicht nur die Fähigkeit zur gezielten Steuerung der Produkteigenschaften in Abhängigkeit von den eingesetzten Komponenten und den Reaktionsbedingungen, sondern eröffnen darüberhinaus den Zugang zu bislang unbekannten Polymerstrukturen mit vielversprechenden Eigenschaften im Hinblick auf technische Anwendungen.

In der Literatur ist eine Vielzahl von Publikationen erschienen, die die Herstellung spezieller Polyolefine mit solchen Katalysatorsystemen zum Gegenstand haben. Nachteilig in fast allen Fällen ist jedoch die Tatsache, daß zur Erzielung akzeptabler Produktivitäten ein hoher Überschuß an Alkylaluminoxanen, bezogen auf die Übergangsmetallkomponente, erforderlich ist (üblicherweise beträgt das Verhältnis Aluminium in Form des Alkylaluminoxans zu Übergangsmetall ca. 1000! - vgl. W. Kaminsky et al., Polyhedron, Vol. 7, No. 22/23 (1988) 2375 ff). Durch den hohen Preis der Alkylaluminoxane einerseits und durch in manchen Fällen erforderliche zusätzliche Polymer-Aufarbeitungsschritte ("deashing steps") andererseits wäre eine Polymerproduktion in technischem Maßstab auf Basis solcher Katalysatorsysteme vielfach unwirtschaftlich. Hinzu kommt, daß das für die Formulierung von Alkylaluminoxanen, insbesondere Methylaluminoxan, vielfach verwendete Lösungsmittel Toluol aus Gründen der Lagerstabilität der Formulierungen (starke Tendenz zur Gelbildung), sowie im Hinblick auf den Anwendungsbereich der letztendlich resultierenden Polyolefine zunehmend unerwünscht ist.

Eine signifikante Reduktion der benötigten Alkylaluminoxan-Menge im Bezug auf die Übergangsmetall-Komponente kann erreicht werden, indem Alkylaluminoxan auf inerte Trägermaterialien, bevorzugt SiO₂, aufgebracht wird (J. C. W. Chien, D. He, J. Polym. Science Part A, Polym. Chem., Vol.29, 1603-1607 (1991). Solche geträgerten Materialien besitzen darüberhinaus den Vorteil der leichten Abtrennbarkeit bei Polymerisationen in kondensierter Phase (Herstellung hochreiner Polymerer) bzw. der Einsetzbarkeit als frei fließende Pulver in modernen Gasphasenprozessen, wobei die Kornmorphologie des Polymeren direkt durch die Partikelform des Trägers vorgegeben werden kann. Darüber hinaus sind trägerfixierte Alkylaluminoxane als trockene Pulver physikalisch stabiler als Lösungen mit vergleichbarem Al-Gehalt. Dies gilt insbesonders für Methylaluminoxan, das, wie bereits erwähnt, in toluolischer Lösung nach einer gewissen Lagerzeit zur Gelbildung neigt.

In der Literatur werden bereits einige Möglichkeiten beschrieben, Alkylaluminoxane auf Trägern zu fixieren: Die EP 0 369 675 (Exxon Chemical) beschreibt ein Verfahren, in dem die Immobilisierung von Alkylaluminoxanen durch Umsetzung einer ca. 10 %igen Lösung von Trialkylaluminium in Heptan mit hydratisiertem Silica (8,7 Gew.-% H₂O) erreicht wird.

In EP 0 442 725 (Mitsui Petrochemical) wird die Immobilisierung durch Reaktion einer Toluol/Wasser-Emulsion mit einer ca. 7 %igen Lösung von Trialkylaluminium in Toluol in Gegenwart von Silica bei Temperaturen von -50 °C bis +80 °C bewirkt.

In der EP-A-0 567 952 wird ein geträgerter Polymerisationskatalysator beschrieben, enthaltend das Reaktionsprodukt
A) einer geträgerten Organoaluminiumverbindung, welche hergestellt wird durch
   (i) Herstellung einer Suspension eines Trägers mit weniger als 3 Gew.-% Wasser in einer Lössung von mindestens einer Alkylaluminiumverbindung unter inerten Bedingungen
   (ii) Hydrolyse der Suspension durch Zugabe von Wasser zu der Suspension und
B) einem Metallocenkatalysator.

Eine weitere Alternative eröffnet US-PS 5 026 797 (Mitsubishi Petrochemical) durch Umsetzung bereits vorgefertigter Alkylaluminoxan-Lösungen mit Silica (vorge-trocknet bei 600 °C) bei 60 °C und nachfolgende Auswaschung des nicht immobilisierten Alkylaluminoxan-Anteils durch Toluol. US-PS 4 921 825 (Mitsui Petrochemical) letztendlich beschreibt ein Verfahren zur Immobilisierung von Alkylaluminoxan durch Fällung aus toluolischen Lösungen mittels n-Decan in Gegenwart von Silica.

Diese Verfahren sind teilweise technisch aufwendig, da sie u. a. zu Beginn niedrige Reaktionstemperaturen bzw. mehrstufige Aufarbeitungsprozesse und dadurch bedingte Ausbeuteverluste beinhalten oder die für eine hohe Katalysatoraktivität relevanten Beladungsgrade des Trägers mit Alkylaluminoxanen oftmals nicht erreichbar sind.

Aufgabe der vorliegenden Erfindung war es daher, diese Nachteile des Standes der Technik zu überwinden und ein Verfahren bereitzustellen, mittels welchem Alkylaluminoxane in hoher Ausbeute und Homogenität in reproduzierbarer Weise auf inerten Trägermaterialien fixiert werden können, wobei die Beladungsgrade in weiten Grenzen variiert werden können, die Kornmorphologie des Trägers erhalten bleibt und die Produkte letztlich als freifließende Pulver vorliegen.

Gegenstand der Erfindung ist ein Verfahren zur Herstellung von auf inerten Trägermaterialien immobilisierten Alkylaluminoxanen, welches dadurch gekennzeichnet ist, daß zu Lösungen von Alkylaluminiumverbindungen in Kohlenwasserstoffen in einem statischen Mischer Wasser dosiert wird und die resultierenden in Form von Dispersionen vorliegenden, das heißt lyophile Dispersionen im Solzustand, (vergleiche Römpp Chemie Lexikon, 9. Auflage, Georg Thieme Verlag Stuttgart, New York 1990, S. 2299 ff) auf inerten Trägermaterialien fixiert werden.

Ein weiterer Gegenstand der Erfindung sind auf Trägermaterialien fixierte Aluminoxane, hergestellt gemäß dem erfindungsgemäßen Verfahren.

Weitere Gegenstände der Erfindung werden durch die Ansprüche gekennzeichnet.

Die erfindungsgemäß verwendeten Dispersionen sind herstellbar durch übliche Hydrolyseverfahren von Alkylaluminiumverbindungen in Kohlenwasserstoffen als Lösungsmittel. Das molare Verhältnis von Wasser zu Alkylaluminiumverbindungen liegt dabei im Bereich von 0,8 : 1 bis 1,3 : 1, vorzugsweise 0,9 : 1 bis 1,2 : 1.

Erfindungsgemäß wird ein Verfahren zur Herstellung bevorzugt, bei welchem Wasser zu einer Lösung von Trialkylaluminium in einem aliphatischen, cycloaliphatischen oder vorzugsweise aromatischen Kohlenwasserstoff über eine Mischdüse in einen statischen Mischer, vorzugsweise einen Strahlschlaufenreaktor (SSR), dosiert wird (Europäische Patentanmeldung Nr. 93118245.5).

Die Funktionsweise des SSR, wie er beispielsweise in DE-A-25 16 284 beschrieben wird, beruht auf einem Flüssigkeitstreibstrahl im Innenrohr, der dem gesamten Reaktorinhalt einen Impuls überträgt und damit eine hohe Umlaufströmung erzeugt. Hierdurch ist der Flüssigkeitsumlaufstrom im Reaktor ca. 8 bis 10fach höher als der Treibstrahlvolumenstrom.

In dem erfindungsgemäßen Verfahren wird in einem Volumenstromverhältnis von 1 : 2.000 bis 1 : 40.000, vorzugsweise 5000 - 20000, über die Mischdüse Wasser in den Strahlschlaufenreaktor dosiert.

Der Strahlschlaufenreaktor sorgt wegen der hohen Umlaufströmung für eine gute und extrem schnelle Vermischung der aluminiumalkylhaltigen Lösung mit Wasser. Aufgrund der hohen Primärdispergierung kann eine lokal zu hohe Konzentration an Wasser vermieden werden, die ansonsten zu Ausbeuteverlusten bedingt durch die Bildung von Aluminiumhydroxid einerseits und unerwünscht hohem Anteil an unumgesetztem Aluminiumtrialkyl andererseits, führt.

Darüber hinaus kann der mittlere Oligomerisationsgrad n, der in der mittleren Molmasse des Reaktionsproduktes zum Ausdruck kommt, durch geeignete Dosierung der Reaktionspartner und Steuerung der Reaktionsparameter gezielt beeinflußt werden. So kann das Molverhältnis H₂O/Aluminiumtrialkyl, insbesondere auch bei Trimethylaluminium (TMA) auf den gewünschten Wert eingestellt werden. Dies ist von besonderer Bedeutung, da die Aktivität von Aluminoxanen als Cokatalysator in der Olefinpolymerisation offenbar vom Oligomerisationsgrad des verwendeten Aluminoxans abhängig ist (Lit.:.W. Kaminsky, Nachr. Chem. Tech. Lab. 29, 373-7 (1981); W. Kaminsky et.al., Makromol. Chem., Macromol. Symp. 3, 377-87 (1986)).

Als aluminiumorganische Verbindungen sind prinzipiell alle auf diesem Gebiet üblichen Verbindungen verwendbar, welche mit Wasser zu Aluminoxanen hydrolysiert werden können. Erfindungswesentlich ist, daß der lyophile Dispersionszustand in Kohlenwasserstoffen erzielbar ist. Die Hydrolyseprodukte sind erfindungsgemäß lyophile Dispersionen, welche sich im Solzustand befinden.

Erfindungsgemäß bevorzugt sind Trialkylaluminiumverbindungen mit kurzkettigen Alkylresten, insbesondere Methylresten.

Als erfindungsgemäß verwendbare Trägermaterialien werden die porösen Oxide eines oder mehrerer der Elemente der Gruppen II, III oder IV des Periodensystems wie ZrO₂, TiO₂, B₂O₃, CaO, ZnO, BaO, vorzugsweise Al₂O₃ und MgO und insbesondere SiO₂, eingesetzt.

Diese Trägermaterialien können Korngrößen im Bereich von 1 - 300 µm, vorzugsweise 10 - 200 µm, aufweisen; Oberflächen von 10 - 1000 m²/g, insbesondere 100 - 500 m²/g; N₂-Porenvolumina von 0,5 - 3 cm³, vorzugsweise 1 - 2 cm³.

Diese Träger sind handelsübliche Materialien, welche die angegebenen Werte in statistischer Verteilung enthalten.

Der Wassergehalt der Trägermaterialien sollte <5 Gew.-%, vorzugsweise <3 Gew.-% und insbesondere <1 Gew.-%, sein. Im Bedarfsfalle werden die handelsüblichen Trägermaterialien daher vor der Anwendung bei Temperaturen von 150 - 1000 °C, vorzugsweise 200 - 500 °C, 2 - 20 Stunden, gegebenenfalls bei reduziertem Druck, getrocknet.

Die Aufbringung und Fixierung der Aluminoxane auf die Trägermaterialien erfolgt nach an sich bekannten Verfahren entweder durch kontinuierliche oder portionsweise Zugabe des Trägermaterials zu den vorgelegten Dispersionen unter gleichzeitiger Homogenisierung der Mischung, oder durch Synthese der Dispersionen direkt in Gegenwart des Trägers. Aus diesen Mischungen wird dann das Lösungsmittel, gegebenenfalls unter vermindertem Druck, entfernt.

Die ursprüngliche Kornmorphologie des Trägermaterials wird durch diese Vorgehensweise nicht verändert.

Das Verhältnis von Träger zu Aluminoxan ist innerhalb relativ weiter Grenzen variierbar, erfindungsgemäß wird es so gewählt, daß auf dem resultierenden freifließenden Pulver aus Trägermaterial und Aluminoxan 5 - 40 Gew.-%, vorzugsweise 10 - 25 Gew.-% Aluminium, in Form von Aluminoxanen vorliegen (siehe Beispiele).

Das erfindungsgemäße Verfahren ermöglicht die Herstellung von geträgerten Aluminoxanen mit nahezu quantitativen Ausbeuten an immobilisiertem Aluminium, bezogen auf eingesetzte Trialkylaluminiumverbindungen, ohne technisch aufwendige Verfahrensschritte. Aufgrund gezielt einstellbarer Parameter und reproduzierbarer Verfahrensbedingungen weisen diese mit dem erfindungsgemäßen Verfahren hergestellten geträgerten Alkylaluminoxane, insbesondere das Methylaluminoxan, hohe Aktivitäten als Cokatalysatoren auf und sind somit hervorragend geeignet für die weitere Herstellung von Katalysator-Systemen für die Olefinpolymerisation.

### Beispiele

### Beispiel 1:

Eine mit Hilfe des Strahlschlaufenreaktors aus 2,92 kg Trimethylaluminium (TMA) (Aluminium-Gehalt: 36,8 %), 0,58 kg Wasser und 21,5 kg Toluol hergestellte Dispersion (Verhältnis H₂O/TMA = 0,8) wurde im 40 1 Stahlreaktor mit 2,0 kg Silica-Trägermaterial (Oberfläche (N₂-BET): 316 m²/g; N₂-Porenvolumen: 1,55 ml/g; Partikelgrößenverteilung: 20 - 80 µm; Restwassergehalt: 2,6 %) verrührt und unter Vakuum bei Raumtemperatur zur Trockene eingeengt. Es wurden 4,3 kg geträgertes Methylaluminoxan MAO in Form eines frei fließenden Pulvers erhalten (Aluminium-Gehalt: 24,5 % = 98 % der Theorie an eingesetztem Aluminium; Verhältnis Methyl/Aluminium: 1,2). 3stündige Extraktion mit Toluol bei 90 °C und nachfolgende Analyse der toluolischen Phase zeigte, daß vollständige Immobilisierung erreicht war.

### Beispiel 2:

Gemäß Beispiel 1 wurde eine Dispersion aus 1,29 kg TMA, 0,29 kg Wasser und 10,5 kg Toluol (Verhältnis H₂O/TMA = 0,9) mit 3,5 kg Silica (Restwassergehalt: 0,3 %) verrührt und im Vakuum zur Trockene eingeengt. Es wurden 4,6 kg frei fließendes Pulver erhalten (Aluminium-Gehalt: 10,0 % = 97 % der Theorie; Methyl/Aluminium: 1,2), wobei analog zu Beispiel 1 vollständige Immobilisierung gezeigt werden konnte.

## Patentansprüche

1. Verfahren zur Herstellung von auf inerten Trägermaterialien immobilisierten Alkylaluminoxanen, dadurch gekennzeichnet, daß zu Lösungen von Alkylaluminiumverbindungen in Kohlenwasserstoffen in einem statischen Mischer Wasser dosiert wird und die resultierenden in Form von Dispersionen vorliegenden Alkylaluminoxane auf inerten Trägermaterialien fixiert werden.

2. Verfahren gemäß Anspruch 1, dadurch gekennzeichnet, daß Dispersionen aus Methylaluminoxanen in aromatischen Kohlenwasserstoffen verwendet werden.

3. Verfahren gemäß den Ansprüchen 1 und 2, dadurch gekennzeichnet, daß Wasser und Aluminiumalkylverbindungen im molaren Verhältnis von 0,8 - 1,3, vorzugsweise 0,9 - 1,2 eingesetzt werden.

4. Verfahren gemäß Anspruch 1, dadurch gekennzeichnet, daß als Trägermaterial SiO₂ mit einem Wassergehalt <5, vorzugsweise <3 Gew.-% eingesetzt wird.

5. Verfahren gemäß den Ansprüchen 1 bis 4, dadurch gekennzeichnet, daß auf dem Trägermaterial 5 - 40, vorzugsweise 10 - 25 Gew.-% Aluminium in Form von Aluminoxanen fixiert ist.

6. Verfahren gemäß den Ansprüchen 1 bis 5, dadurch gekennzeichnet, daß das Trägermaterial der Dispersion zudosiert wird.

7. Verfahren gemäß den Ansprüchen 1 bis 5, dadurch gekennzeichnet, daß das Trägermaterial bereits während der Herstellung der Dispersion in der Mischung präsent ist.

8. Cokatalysator, bestehend aus auf interten Trägermaterialien immobilisierten Alkylalu-minoxanen, hergestellt nach einem der Verfahren gemäß den Ansprüchen 1 bis 7.

## Claims

1. Process for the preparation of alkylaluminoxanes immobilized on inert support materials, characterized in that water is metered into solutions of alkylaluminium compounds in hydrocarbons in a static mixer and the resulting alkylaluminoxanes present in the form of dispersions are fixed on inert support materials.

2. Process according to Claim 1, characterized in that dispersions of methylaluminoxanes in aromatic hydrocarbons are used.

3. Process according to Claims 1 and 2, characterized in that water and alkylaluminium compounds are used in a molar ratio of 0.8-1.3, preferably 0.9-1.2.

4. Process according to Claim 1, characterized in that the support material used is SiO₂ having a water content < 5, preferably < 3, % by weight.

5. Process according to Claims 1 to 4, characterized in that 5-40, preferably 10-25, % by weight of aluminium is fixed on the support material in the form of aluminoxanes.

6. Process according to Claims 1 to 5, characterized in that the support material is metered into the dispersion.

7. Process according to Claims 1 to 5, characterized in that the support material is already present in the mixture during the preparation of the dispersion.

8. Cocatalyst comprising alkylaluminoxanes immobilized on inert support materials, prepared by one of the processes according to Claims 1 to 7.

## Revendications

1. Procédé pour la fabrication d'alkylaluminoxanes immobilisés sur des matériaux de support inertes, caractérisé en ce que l'on ajoute de l'eau de manière dosée à des solutions de composés alkylaluminium dans des hydrocarbures, et en ce que les alkylaluminoxanes résultants, présents sous forme de dispersions, sont fixés sur des matériaux de support inertes.

2. Procédé selon la revendication 1, caractérisé en ce que l'on utilise des dispersions de méthylaluminoxanes dans des hydrocarbures aromatiques.

3. Procédé selon les revendications 1 et 2, caractérisé en ce que l'eau et les composés alkylaluminium sont mis en oeuvre dans des rapports molaires de 0,8 - 1,3, de préférence de 0,9 - 1,2.

4. Procédé selon la revendication 1, caractérisé en ce que l'on utilise comme matériau de support du SiO₂ d'une teneur en eau < 5, de préférence < 3% en poids.

5. Procédé selon les revendications 1 à 4, caractérisé en ce que 5 - 40, de préférence 10 - 25% en poids d'aluminium est fixé sur le matériau de support sous la forme d'aluminoxanes.

6. Procédé selon les revendications 1 à 5, caractérisé en ce que le matériau de support est ajouté de manière dosée à la dispersion.

7. Procédé selon les revendications 1 à 5, caractérisé en ce que le matériau de support est déjà présent dans le mélange pendant la préparation de la dispersion.

8. Cocatalyseur, consistant en alkylaluminoxanes immobilisés sur des matériaux de support inertes, fabriqué selon l'un quelconque des procédés conformément aux revendications 1 à 7.
